# FASCICULE DE BREVET EUROPEEN

(11) **EP 2 361 790 B1**
(45) Date de publication et mention de la délivrance du brevet: **12.09.2012**
(21) Numéro de dépôt: 11155436.6
(22) Date de dépôt: 22.02.2011
(51) Int. Cl.: B60C 23/04, H01Q 1/22

(54) **Pneumatique comprenant un organe électronique**
Reifen mit elektronischem Bauelement
Tyre comprising an electronic element

(30) Priorité: 23.02.2010 FR 1051284
(43) Date de publication de la demande: 31.08.2011
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Battocchio, Claudio, 63200, RIOM (FR); Boursin, Arnaud, 63720, CHAPPES (FR)
(74) Mandataire: Dequire, Philippe Jean-Marie Denis

(56) Documents cités:
- EP-A2- 0 389 406
- WO-A1-99/29523
- WO-A1-2004/016454
- AT-B- 388 138
- JP-A- 11 042 915
- US-A- 5 562 787

## Description

La présente invention concerne un pneumatique comprenant un organe électronique.

Elle s'applique en particulier, mais non exclusivement, à un pneumatique destiné à porter de lourdes charges et gonflé à très haute pression, supérieure à 12 bars, tel que par exemple un pneumatique d'avion.

Un pneumatique, répondant aux critères ci-dessus comprend usuellement une nappe carcasse munie de fils textiles, ceci à la différence d'un pneumatique pour véhicule poids lourds qui comprend généralement des fils de nappe carcasse en matériau métallique.

On définira les directions axiale, radiale et circonférentielle d'un pneumatique relativement à l'axe de révolution de ce pneumatique.

On connaît déjà dans l'état de la technique, notamment d'après EP 0 389 406, un pneumatique comprenant un organe électronique. Dans ce document, l'organe électronique comprend un transpondeur à identification par radiofréquence passif muni de deux antennes formant dipôle. Ce type de transpondeur est généralement désigné par le sigle anglais RFID. Un tel organe peut stocker des données, par exemple, relatives à la fabrication du pneumatique.

Le document WO 2004/0164454 A1 présente un pneumatique comportant un transpondeur RFID fixé à l'intérieur de la structure du pneumatique et couplé capacitivement à un renfort conducteur servant d'antenne. Le document AT 388138 B présente un pneumatique pour avion comportant une nappe de protection avec des renforts métalliques disposés de façon ondulée.

Le pneumatique décrit dans EP 0 389 406, notamment illustré à la figure 2 de ce document, comprend une tringle annulaire, de révolution autour d'un axe coïncidant sensiblement avec l'axe de révolution du pneumatique, et une armature de carcasse, de forme générale toroïdale coaxiale à la tringle, comprenant une partie repliée autour de la tringle.

Le transpondeur est positionné dans la masse du pneumatique si bien qu'il crée dans le pneumatique une interface de matières, à savoir l'interface définie par la jonction entre au moins une première masse de gomme et une deuxième masse formée par le transpondeur.

Dans EP 0 389 406, une partie du transpondeur, en particulier une des antennes, s'étend dans le volume compris entre la partie repliée de l'armature de nappe carcasse et une partie de cette armature de carcasse en vis-à-vis axialement de la partie repliée.

Or, on constate que, dans le cas d'un pneumatique pour avion, le positionnement du transpondeur proposé dans EP 0 389 406 n'est pas optimisé en raison des efforts particulièrement élevés que subit ce pneumatique en service et qui peuvent entraîner des ruptures du transpondeur et notamment de ses antennes.

L'invention a notamment pour but d'optimiser la position d'un organe électronique, tel qu'un transpondeur, dans la masse du pneumatique de façon à optimiser l'endurance du transpondeur ainsi que la transmission des données stockées dans le transpondeur, ceci sans modifier les principales étapes de fabrication du pneumatique ni son architecture.

A cet effet, l'invention a pour objet un pneumatique d'avion ayant la capacité de travailler à une pression de gonflage supérieure à 12 bars, comprenant un sommet, deux flancs et deux bourrelets, une armature de carcasse ancrée dans les deux bourrelets et constituée d'au moins une nappe de renforts textiles, une armature de sommet avec radialement de l'intérieur vers l'extérieur un bloc de travail constitué de nappes de renfort textiles et un bloc de protection comprenant des renforts orientés sensiblement circonférentiellement et un organe électronique de forme générale allongée, et comprenant un transpondeur à identification par radiofréquence passif muni de deux antennes formant dipôle. Ce pneumatique est **caractérisé en ce que** les renforts du bloc de protection de l'armature sommet sont des renforts métalliques disposés de façon ondulée et **en ce que** l'organe électronique est disposé dans la structure du pneumatique sous le sommet, radialement intérieurement relativement à l'armature de nappe carcasse et orienté suivant une direction sensiblement axiale.

Par axialement intérieurement relativement à l'armature de nappe carcasse, on entend que l'organe est plus proche de la surface du pneumatique en contact avec l'air interne que l'armature de nappe carcasse.

L'orientation de l'organe électronique suivant une direction sensiblement axiale a l'avantage de permettre à cet organe électronique de supporter sans dommages la conformation de l'ébauche du pneumatique lors de sa fabrication, c'est-à-dire l'opération qui consiste, après avoir déposé sur un tambour de fabrication les premiers produits, notamment la gomme intérieure, l'organe, l'armature de carcasse et les tringles, à donner à cette ébauche cylindrique une forme torique.

Il a aussi été trouvé que, lorsque l'organe est orienté axialement, les renforts métalliques du bloc de protection ne limitent pas l'efficacité de la transmission radio fréquence des données de l'organe.

Avantageusement, le pneumatique comportant une masse de gomme, dite gomme intérieure, délimitée par une surface interne en contact avec l'air intérieur au pneumatique, et une surface externe en contact avec une masse de gomme adjacente, l'organe électronique est placé à l'interface entre la gomme intérieure et la masse de gomme adjacente.

Cette position de l'organe électronique selon l'invention permet de mettre en place aisément l'organe électronique lors de l'assemblage des matériaux du pneumatique à cru. Et cela de façon insensible relativement aux variations d'architecture du côté extérieur de l'armature de carcasse.

L'organe électronique est aussi particulièrement bien protégé vis-à-vis de sollicitations extérieures tels des chocs du pneumatique contre un obstacle sur la chaussée ou un nid-de-poule.

En étant placé à l'intérieur de la structure du pneumatique, l'organe est aussi protégé de tout type de contaminant pouvant se trouver à l'intérieur de la cavité interne du pneumatique (eau, huile, produits d'étanchéité...).

Enfin, cette position permet une endurance de l'organe sensiblement améliorée relativement à toute position extérieurement à l'armature de carcasse.

Avantageusement, l'organe électronique est disposé sous le sommet du pneumatique au milieu de la largeur du sommet.

La transmission des données par l'organe électronique est tout à fait satisfaisante. Le positionnement au milieu de la largeur du sommet présente l'avantage d'avoir la même distance de lecture de l'organe, que l'on soit du côté gauche ou du côté droit du pneumatique.

Selon une autre caractéristique optionnelle du pneumatique selon l'invention, l'organe électronique est enveloppé d'une masse de gomme d'enrobage.

De façon avantageuse, la constante diélectrique relative de la gomme de la masse d'enrobage est inférieure aux constantes diélectriques relatives de la gomme intérieure et de la masse de gomme adjacente.

Grâce à une telle gomme d'enrobage, la transmission des données stockées par l'organe électronique est améliorée. En effet, d'une manière générale, plus la constante diélectrique d'une masse de gomme enrobant l'organe électronique est élevée, plus le signal électrique reçu et émis par l'organe électronique est atténué. Les constantes diélectriques des gomme intérieure et masse de gomme adjacente, généralement supérieures à 10 dans la gamme UHF, la transmission des données est fortement améliorée dans le cas où la constante diélectrique relative de la gomme de la masse d'enrobage est inférieure aux constantes diélectriques relatives des gommes adjacentes dans le domaine de fréquence utilisé. De préférence, la constante diélectrique de la masse de gomme d'enrobage est inférieure à 4 et de préférence inférieure à 3 dans la gamme de fréquences UHF.

De préférence, la masse de gomme d'enrobage a une longueur dans le sens axial limitée n'excédant la longueur de l'organe électronique que de quelques millimètres à chacune de ses extrémités. Par quelques millimètres, on entend de l'ordre de trois à cinq millimètres.

La masse de gomme adjacente peut être constituée par l'armature de carcasse. Cette masse de gomme adjacente peut aussi être une masse de gomme additionnelle disposée entre la gomme intérieure et l'armature de nappe carcasse du pneumatique. La présence d'une telle masse de gomme additionnelle est usuelle dans les architectures de pneumatiques pour avion.

La gomme intérieure peut aussi, selon un mode de réalisation préférentiel, être constituée par l'assemblage d'au moins deux masses de gomme.

L'invention sera mieux comprise à la lecture de la description qui va suivre, donnée uniquement à titre d'exemple non limitatif et faite en se référant aux dessins dans lesquels :
- la figure 1 est une vue en coupe radiale d'une partie d'un pneumatique selon l'invention;
- la figure 2 est une vue de détail de la figure 1 ;
- la figure 3 est une vue de détail d'un second mode de réalisation d'un pneumatique selon l'invention; et
- la figure 4 est une vue très schématique en perspective de la partie du pneumatique de la figure 1, avec des arrachements.

Sur les figures, on a représenté des axes X, Y, Z orthogonaux entre eux correspondant aux orientations habituelles radiale (X), axiale (Y) et circonférentielle (Z) d'un pneumatique.

On entend par « orientation sensiblement circonférentielle » une orientation moyenne ne s'écartant pas de plus de cinq degrés de la direction circonférentielle Z.

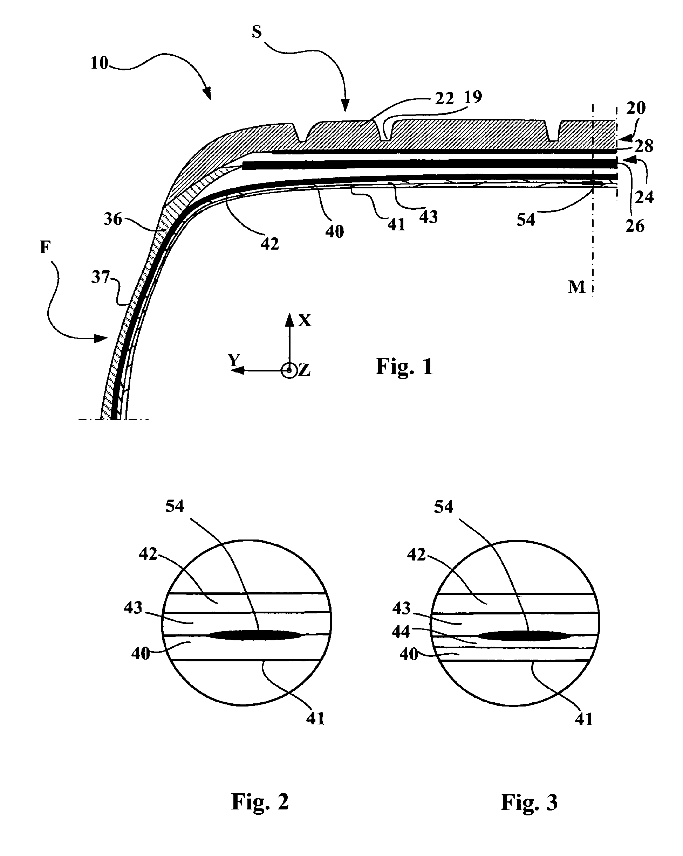

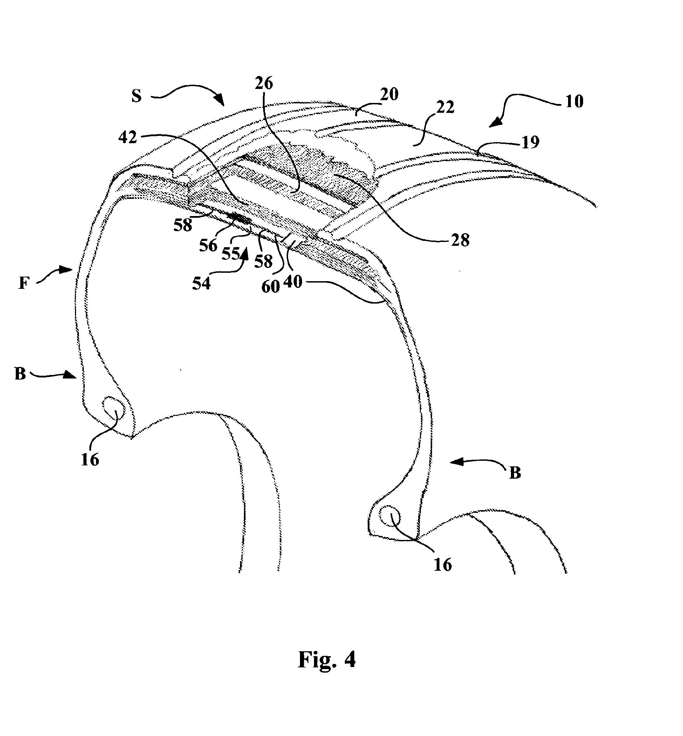

On a représenté sur les figures 1 et 4 un pneumatique selon l'invention désigné par la référence générale 10. En l'espèce, le pneumatique 10 est destiné à être monté sur une roue d'avion.

De façon classique, le pneumatique 10 comprend un sommet S prolongé par deux flancs F et deux bourrelets B. Un seul flanc et le sommet sont représentés sur la figure 1.

Les tringles 16 sont noyées chacune dans un bourrelet B. Les deux tringles 16 sont agencées symétriquement par rapport à un plan radial médian M du pneumatique (voir fig. 4).

Chaque tringle 16 est de révolution autour d'un axe de référence. Cet axe de référence, sensiblement parallèle à la direction Y, est sensiblement confondu avec un axe de révolution du pneumatique.

Le sommet S comprend une bande de roulement 20, munie de sculptures 22, ainsi qu'une armature de sommet 24. Cette armature 24 comprend un bloc de travail 26 et un bloc de protection 28. Le bloc de travail est constitué de plusieurs nappes de renforts textiles. Le bloc de protection 28 est de façon préférentielle constitué de renforts métalliques posés avec des ondulations dans le plan du sommet pour obtenir la plus grande efficacité possible. Chaque renfort conserve une orientation moyenne sensiblement circonférentielle.

Une masse de gomme 36 s'étend radialement du sommet jusqu'au niveau de la tringle 16 du bourrelet B en délimitant une surface extérieure 37 du flanc F et du bourrelet B.

Le pneumatique 10 comprend également une masse de gomme intérieure étanche 40 ainsi qu'une armature de carcasse 42. La masse de gomme intérieure ou gomme intérieure 40 est délimitée par une surface interne 41 en contact avec l'air intérieur au pneumatique, et une surface externe en contact avec une masse de gomme adjacente. Selon les architectures de pneumatique, les gommes adjacentes peuvent être l'armature de nappe carcasse 42 ou une ou plusieurs gommes additionnelles disposées entre la gomme intérieure et la nappe carcasse. Dans l'exemple de la figure 1, entre l'armature de carcasse 42 et la gomme étanche 40 se trouve une masse de gomme additionnelle 43. Cette masse de gomme additionnelle 43 s'étend d'un bourrelet à l'autre entre l'armature de carcasse 42 et la gomme étanche 40. L'armature de carcasse dans l'exemple représenté comprend un ou plusieurs nappes de renforts textiles orientés sensiblement radialement.

Le sommet S du pneumatique 10 comprend également un organe électronique 54 optionnellement enrobé d'une masse de gomme 60. De préférence, l'organe électronique 54 a une forme générale allongée suivant une direction sensiblement axiale Y (parallèle à l'axe de rotation). En l'espèce, l'organe 54 comprend un transpondeur à identification par radiofréquence (RFID) passif 56 muni de deux antennes 58 formant dipôle.

L'organe 54 est disposé entre la gomme intérieure 40 et la nappe carcasse 42. La figure 2, détail de la figure 1, illustre la position de l'organe 54 dans le sommet S. Entre la gomme intérieure 40 et la nappe carcasse 42 se trouve une gomme additionnelle 43. L'organe est disposé à l'interface entre la gomme additionnelle 43 et la gomme intérieure 40. En cas d'absence de cette gomme additionnelle 43, on peut disposer l'organe à l'interface entre la gomme intérieure et l'armature de carcasse. On rappelle que l'armature de nappe carcasse est constituée d'une ou de plusieurs nappes comportant chacune des renforts textiles d'orientation sensiblement radiale noyés entre deux couches de gommes de calandrage. Il n'y a donc pas de contact direct entre l'organe et les renforts de l'armature de nappe carcasse.

L'organe peut aussi être placé à l'interface entre la gomme additionnelle 43 et la gomme intérieure 40, ou à l'interface entre l'armature de carcasse et la gomme additionnelle 43. De préférence l'organe est placé au milieu du sommet S, à proximité du plan médian M.

La figure 3 présente de façon similaire à la figure 2 un second mode de réalisation d'un pneumatique conforme à l'invention dans lequel la gomme intérieure 40 est constituée de l'assemblage de deux masses de gomme, une première masse de gomme correspondant à la gomme intérieure étanche 40 et une seconde masse de gomme additionnelle 44. L'organe électronique 54 est alors placé à l'interface entre la première masse de gomme additionnelle 43 et la seconde masse de gomme additionnelle 44.

La figure 4 présente de façon très schématique une vue en perspective avec des arrachements partiels de la face externe du pneumatique 10.

On voit sur cette figure la surface extérieure de la bande de roulement 20 du pneumatique 10 avec une sculpture 22 comprenant quatre sillons circonférentiels 19. Sous la bande de roulement 20, se trouve le bloc de protection 28 de l'armature de sommet. Ce bloc de protection comporte une nappe de renforts métalliques posés avec des ondulations en conservant une orientation moyenne circonférentielle. Sous le bloc de protection, on voit le bloc de travail 26 composé de bandelettes de renforts textiles trancanées avec un angle de l'ordre d'une dizaine de degrés relativement à la direction circonférentielle alterné d'une couche de renforts à la suivante complété optionnellement de renforts orientés sensiblement circonférentiellement. Entre les blocs de l'armature de sommet d'une part et entre l'armature de sommet et l'armature de carcasse se trouvent des masses de gomme de liaison.

Sous le bloc de travail 26, on voit une pluralité de nappes de renfort orientés axialement sous le sommet (et radialement dans les flancs) constituant l'armature de carcasse 42. Sous cette armature de carcasse, on voit l'organe 54 optionnellement entouré d'une gomme d'enrobage 55 disposé sur la gomme intérieure 40. Cette figure schématique ne présente pas de masse de gomme additionnelle 43. La surface interne du pneumatique en contact avec l'air intérieur au pneumatique est la surface interne de la masse de gomme 40, dite gomme intérieure. L'organe électronique 54 est constitué d'un transpondeur à identification par radiofréquence (RFID) passif 56 muni de deux antennes 58 formant dipôle. L'ensemble est orienté dans la direction axiale parallèlement aux arceaux des renforts de l'armature de nappe carcasse. L'organe électronique 54 est enveloppé par deux couches minces de masse de gomme d'enrobage 55. Ces deux couches s'étendent axialement au-delà des antennes 58 d'une distance comprise entre 3 et 5 mm. Les deux couches 55 constituent la masse de gomme d'enrobage 60 de l'organe 54. L'orientation axiale des antennes 58 de l'organe 54 permet de conserver une excellente transmission des signaux même en présence des renforts métalliques du bloc de protection du sommet. En effet, ces renforts métalliques sont orientés circonférentiellement. Cette orientation axiale permet aussi une bonne endurance de l'organe dans le pneumatique lors de sa fabrication et lors de son service.

La constante diélectrique de la gomme d'enrobage est inférieure aux constantes diélectriques des gommes intérieure et additionnelle ainsi que des calandrages de la nappe carcasse.

L'introduction d'un organe électronique 54 dans la structure d'un pneumatique lors de sa confection est simple. Après avoir mis en place la gomme intérieure sur un tambour de confection, on applique à un endroit approprié l'ensemble organe et masse d'enrobage, on applique ensuite la gomme additionnelle puis la nappe carcasse et on achève usuellement l'application de l'ensemble des gommes et produits nécessaires pour constituer l'ébauche crue du pneumatique. Après vulcanisation de cette ébauche, on obtient une enveloppe pneumatique ou pneumatique prêt à l'emploi.

L'interface choisie pour mettre en place l'organe électronique peut varier en fonction des techniques de fabrication utilisées. Lorsque l'on réalise un assemblage semi-fini constitué de la gomme intérieure et d'une gomme adjacente, l'interface entre cette gomme intérieure et la gomme adjacente n'est pas disponible pour la mise en place de l'organe au cours de la fabrication du pneumatique. On met alors l'organe à l'interface entre cette gomme additionnelle et l'armature de carcasse du pneumatique. Dans l'exemple de la figure 2, l'organe électronique serait alors placé à l'interface entre la gomme additionnelle 43 et l'armature de carcasse 42. Dans l'exemple de la figure 3, l'organe électronique est alors disposé à l'interface entre la gomme additionnelle 44 et la gomme additionnelle 43 radialement intérieurement relativement à l'armature de carcasse du pneumatique.

L'invention n'est pas limitée aux exemples décrits et représentés et diverses modifications peuvent y être apportées sans sortir de son cadre défini par les revendications annexées.

## Revendications

1. Pneumatique d'avion (10) ayant la capacité de travailler à une pression de gonflage supérieure à 12 bars, comprenant un sommet, deux flancs et deux bourrelets, une armature de carcasse (42) ancrée dans les deux bourrelets et constituée d'au moins une nappe de renforts textiles, une armature de sommet (24) avec radialement de l'intérieur vers l'extérieur un bloc de travail (26) constitué de nappes de renfort textiles et un bloc de protection (28) comprenant des renforts orientés sensiblement circonférentiellement, et un organe électronique (54) de forme générale allongée comprenant un transpondeur à identification par radiofréquence passif (56) muni de deux antennes formant dipôle (58), **caractérisé en ce que** les renforts du bloc de protection (28) de l'armature sommet sont des renforts métalliques disposés de façon ondulée et **en ce que** l'organe électronique est disposé dans la structure du pneumatique sous le sommet, radialement intérieurement relativement à l'armature de nappe carcasse et orienté suivant une direction sensiblement axiale.

2. Pneumatique d'avion (10) selon la revendication 1, comportant une masse de gomme (40), dite gomme intérieure, délimitée par une surface interne (41) en contact avec l'air intérieur au pneumatique, et une surface externe en contact avec une masse de gomme adjacente (42, 43), tel que l'organe électronique (54) est disposé à l'interface entre ladite gomme intérieure (40) et ladite masse de gomme adjacente (42, 43).

3. Pneumatique d'avion (10) selon la revendication 2, dans lequel l'armature de nappe carcasse (42) constitue la masse de gomme adjacente.

4. Pneumatique d'avion (10) selon la revendication 2, dans lequel la masse de gomme adjacente est une masse de gomme additionnelle (43) disposée entre la gomme intérieure (40) et l'armature de carcasse (42) du pneumatique.

5. Pneumatique d'avion (10) selon l'une des revendications 3 et 4, dans lequel la gomme intérieure est constituée par l'assemblage d'au moins deux masses de gommes.

6. Pneumatique (10) selon l'une quelconque des revendications 1 à 5, dans lequel l'organe électronique (54) est disposé au milieu de la largeur du sommet du pneumatique.

7. Pneumatique (10) selon l'une quelconque des revendications précédentes, dans lequel l'organe électronique (55) est enveloppé d'une masse de gomme d'enrobage (55, 60).

8. Pneumatique (10) selon la revendication 7, dans lequel la constante diélectrique relative de la gomme de la masse d'enrobage (55, 60) est inférieure à la constante diélectrique relative de la gomme intérieure (40) et de la gomme adjacente (42, 43).

9. Pneumatique (10) selon l'une des revendications 7 et 8, dans lequel la masse de gomme d'enrobage (55, 60) a une longueur dans le sens axial limitée n'excédant la longueur de l'organe électronique (54) que de quelques millimètres à chacune de ses extrémités.

10. Pneumatique selon la revendication 9, dans lequel la longueur dans le sens axial de la masse de gomme d'enrobage excède la longueur de l'organe électronique (54) de 3 à 5 mm.

## Claims

1. Aeroplane tyre (10) having the ability to operate at an inflation pressure in excess of 12 bar, comprising a crown, two sidewalls and two beads, a carcass reinforcement (42) anchored in the two beads and comprising at least one ply of textile reinforcements, a crown reinforcement (24) with, radially from the inside outward, a working block (26) comprising plies of textile reinforcement and a protective block (28) comprising reinforcements directed substantially circumferentially, and an electronic component (54) of elongate overall shape, comprising a passive radio frequency identification device transponder (56) equipped with two antennas forming a dipole (58), **characterized in that** the reinforcements of the protective block (28) are metal reinforcements laid in a wavy configuration and **in that** the electronic component is positioned in the structure of the tyre under the crown, radially on the inside in relation to the carcass ply reinforcement and directed in a substantially axial direction.

2. Aeroplane tyre (10) according to Claim 1, comprising a mass of rubber (40) known as the inner liner, delimited by an internal surface (41) in contact with the air inside the tyre, and an outer surface in contact with a mass of adjacent rubber (42, 43), such that the electronic component (54) is positioned at the interface between the said inner liner (40) and the said mass of adjacent rubber (42, 43).

3. Aeroplane tyre (10) according to Claim 2, in which the carcass ply reinforcement (42) constitutes the mass of adjacent rubber.

4. Aeroplane tyre (10) according to Claim 2, in which the mass of adjacent rubber is a mass of additional rubber (43) positioned between the inner liner (40) and the carcass reinforcement (42) of the tyre.

5. Aeroplane tyre (10) according to either of Claims 3 and 4, in which the inner liner consists of an assembly of at least two masses of rubber.

6. Tyre (10) according to any one of Claims 1 to 5, in which the electronic component (54) is positioned in the middle of the width of the tyre crown.

7. Tyre (10) according to any one of the preceding claims, in which the electronic component (55) is enveloped by a mass of coating rubber (55, 60).

8. Tyre (10) according to Claim 7, in which the relative dielectric constant of the rubber of the coating mass (55, 60) is lower than the relative dielectric constant of the inner liner (40) and of the adjacent rubber (42, 43).

9. Tyre (10) according to either of Claims 7 and 8, in which the mass of coating rubber (55, 60) has a limited length in the axial direction which length exceeds the length of the electronic component (54) by just a few millimetres at each of its ends.

10. Tyre according to Claim 9, in which the length, in the axial direction, of the mass of coating rubber exceeds the length of the electronic component (54) by 3 to 5 mm.

## Patentansprüche

1. Flugzeugreifen (10), der die Fähigkeit hat, bei einem Reifenfülldruck von mehr als 12 Bar zu arbeiten, der einen Scheitel, zwei Flanken und zwei Wülste, eine Karkassenbewehrung (42), die in den zwei Wülsten verankert ist und aus mindestens einer Lage von textilen Verstärkungen besteht, eine Scheitelbewehrung (24) mit radial von innen nach außen einem aus Lagen von textilen Verstärkungen bestehenden Arbeitsblock (26) und einem im Wesentlichen in Umfangsrichtung ausgerichtete Verstärkungen enthaltenden Schutzblock (28) und ein elektronisches Organ (54) allgemein länglicher Form enthält, das einen passiven Transponder mit Funkfrequenzkennzeichnung (56) enthält, der mit zwei einen Dipol (58) formenden Antennen versehen ist, **dadurch gekennzeichnet, dass** die Verstärkungen des Schutzblocks (28) der Scheitelbewehrung gewellt angeordnete metallische Verstärkungen sind, und dass das elektronische Organ in der Struktur des Luftreifens unter dem Scheitel bezüglich der Karkassenlagenbewehrung radial innen angeordnet und in einer im Wesentlichen axialen Richtung ausgerichtet ist.

2. Flugzeugreifen (10) nach Anspruch 1, der eine Gummimasse (40), Innengummi genannt, aufweist, die von einer Innenfläche (41) in Kontakt mit der Luft im Luftreifen und einer Außenfläche in Kontakt mit einer angrenzenden Gummimasse (42, 43) begrenzt wird, derart, dass das elektronische Organ (54) an der Verbindungsfläche zwischen dem Innengummi (40) und der angrenzenden Gummimasse (42, 43) angeordnet ist.

3. Flugzeugreifen (10) nach Anspruch 2, bei dem die Karkassenlagenbewehrung (42) die angrenzende Gummimasse bildet.

4. Flugzeugreifen (10) nach Anspruch 2, bei dem die angrenzende Gummimasse eine zusätzliche Gummimasse (43) ist, die zwischen dem Innengummi (40) und der Karkassenbewehrung (42) des Luftreifens angeordnet ist.

5. Flugzeugreifen (10) nach einem der Ansprüche 3 und 4, bei dem der Innengummi aus der Zusammenfügung von mindestens zwei Gummimassen besteht.

6. Luftreifen (10) nach einem der Ansprüche 1 bis 5, bei dem das elektronische Organ (54) in der Mitte der Breite des Scheitels des Luftreifens angeordnet ist.

7. Luftreifen (10) nach einem der vorhergehenden Ansprüche, bei dem das elektronische Organ (54) mit einer Masse von Umhüllungsgummi (55, 60) umhüllt ist.

8. Luftreifen (10) nach Anspruch 7, bei dem die relative Dielektrizitätskonstante des Gummis der Umhüllungsmasse (55, 60) geringer als die relative Dielektrizitätskonstante des Innengummis (40) und des angrenzenden Gummis (42, 43) ist.

9. Luftreifen (10) nach einem der Ansprüche 7 und 8, bei dem die Umhüllungsgummimasse (55, 60) eine begrenzte Länge in axialer Richtung hat, die die Länge des elektronischen Organs (54) nur um einige Millimeter an jedem seiner Enden überschreitet.

10. Luftreifen nach Anspruch 9, bei dem die Länge der Umhüllungsgummimasse in axialer Richtung die Länge des elektronischen Organs (54) um 3 bis 20 mm überschreitet.
